# EUROPÄISCHE PATENTANMELDUNG

(11) **EP 4 098 627 A1**
(43) Veröffentlichungstag der Anmeldung: **07.12.2022**
(21) Anmeldenummer: 22176523.3
(22) Anmeldetag: 31.05.2022
(51) Int. Cl.: C02F 1/42, B01J 39/05, B01J 39/18, B01J 41/05, B01J 41/12, B01J 47/024, B01J 47/04

(54) **VORRICHTUNG ZUR REDUZIERUNG DES SAUERSTOFFGEHALTES IM NACHSPEISEWASSER FÜR HEIZUNGSANLAGEN**

(30) Priorität: 01.06.2021 DE 102021114126
(71) Anmelder: Perma-Trade Wassertechnik GMBH, 71229 Leonberg (DE)
(72) Erfinder: ENDE, Dietmar, 71287 Weissach (DE); SAUTTER, Michael, 71229 Leonberg (DE)
(74) Vertreter: Herrmann, Jochen

(57) **Zusammenfassung**

Die Erfindung betrifft eine Vorrichtung zur zeitgleichen Reduzierung des Sauerstoffgehaltes und der Wasserhärte im Nachspeisewasser für eine Heizanlage oder des Prozesswassers einer Heizungsanlage, mit einer von Wasser durchströmbaren Mischbettpatrone, wobei die Mischbettpatrone ein Mischbettharz aufweist, wobei das Mischbettharz einen Kationenaustauscher in der Natriumform und einen Anionenaustauscher aufweist, wobei der Anionenaustauscher ein Anionentauscherharz aufweist, das zum überwiegenden Anteil von der OH⁻Form mit einem Sauerstoffbindemittel, nämlich Sulfit in die Sulfitform konvertiert ist. Mit einer solchen Vorrichtung lässt sich Heizungswasser auf einfache Weise alkalisieren und gleichzeitig eine Sauerstoffzehrung vornehmen.

## Beschreibung

Die Erfindung betrifft eine Vorrichtung zur Reduzierung des Sauerstoffgehaltes im Nachspeisewasser für eine Heizanlage oder des Prozesswassers einer Heizungsanlage, mit einer von Wasser durchströmten Behandlungspatrone.

Die Erfindung betrifft auch ein Verfahren zur Reduzierung des Sauerstoffgehaltes des Nachspeisewassers oder des Prozesswassers einer Heizungsanlage.

Heizungsanlagen gemäß der Erfindung können beispielsweise Heizungsanlagen für Gebäude sein, mit einem Prozesskreislauf, in dem Prozesswasser im Kreislauf geführt ist. Der Prozesskreislauf kann dabei einen Warmwassererzeuger mit einem Wärmetauscher aufweisen. Mit dem Warmwassererzeuger wird Wärme erzeugt und über den Wärmetauscher in das im Prozesskreislauf geführte Prozesswasser eingetragen. Über den Prozesskreislauf wird das warme Wasser zumindest einem Heizkörper des Prozesskreislaufs zugeführt. Das Prozesswasser wird über den Rücklauf wieder dem Warmwassererzeuger zugeleitet. Aufgrund von Leitungsverlusten kann es vorkommen, dass der Druck im Prozesskreislauf absinkt.

Dann muss Nachspeisewasser in den Prozesskreislauf gefördert werden. Dies geschieht üblicherweise an einem Nachspeise-Wasseranschluss des Prozesskreislaufs. Über diesen Nachspeise-Wasseranschluss wird, vorzugsweise über einen Systemtrenner, Frischwasser von einem Frischwasseranschluss in den Prozesskreislauf eingeleitet.

In Heizkreisläufen gilt eingetragener Sauerstoff als Hauptverursacher von Korrosionsschäden. Während Salze und Kalk einfach mit Hilfe von lonenaustauscherpatronen zur Enthärtung oder Entsalzung aus dem Füll- und Ergänzungswasser entfernt werden können, bleibt der Sauerstoffgehalt im Wasser dadurch unbeeinflusst.

Um zur Verhütung von Korrosionsschäden den im Wasser gelösten Sauerstoff zu entfernen sind verschiedene Methoden bekannt. Physikalische Methoden, wie beispielsweise eine thermische Entgasung oder eine Vakuum-Entgasung, sind apparativ sehr aufwändig. Die Zudosierung chemischer organischer oder anorganischer Sauerstoffbindemittel, wie beispielsweise Natriumsulfit, erhöht die Leitfähigkeit des Systemwassers in der Regel deutlich und vergrößert dadurch grundsätzlich das Korrosionsrisiko. Elektrochemische Verfahren, bei denen eine Sauerstoffreduktion an vorzugsweise großen Kathodenflächen erfolgt, sind ebenfalls apparativ aufwändig, da eine potentiostatische Steuerung erforderlich ist und Möglichkeiten zur Entschlammung als auch zur Entlüftung (Gasbildung) geschaffen werden müssen. Zudem wird je nach System sogenannter Sekundärsauerstoff an der Anode erzeugt, der gesondert abgeschieden werden muss.

Aus DE 10 2018 1298 625 A1 ist ein Verfahren zur Reduzierung des Sauerstoffgehalts des Heizungswassers einer Heizungsanlage bekannt. Das Heizungswasser (Prozesswasser) wird dabei im Zirkulationsbetrieb durch einen, ein Reduktionsmittel enthaltenden Kationenaustauscher oder durch einen ein Reduktionsmittel enthaltenden Anionenaustauscher, geleitet. Der in dem Heizungswasser enthaltene Sauerstoff wird, beim zirkulierenden Durchfluss des Heizungswassers durch den Kationenaustauscher oder den Anionenaustauscher, durch Reaktion mit dem Reduktionsmittel, zumindest anteilig aus dem Heizungswasser entfernt. Das Heizungswasser kann in Strömungsrichtung nach dem Anionenaustauscher oder nach dem Kationenaustauscher durch eine Mischbettpatrone geleitet werden. Durch die im Umlaufwasser eingesetzte Mischbettpatrone können mögliche Nebenprodukte entfernt werden, die beispielsweise bei der Behandlung des Prozesswassers in dem Anionenaustauscher oder dem Kationenaustauscher entstehen. Weiterhin kann zur Filterung von Rückständen ein Tiefenfilter im Prozesskreislauf vorgesehen sein.

Aus der GB 788,112 ist ein Verfahren zum Entfernen von Sauerstoff aus sauerstoffhaltigen Flüssigkeiten, insbesondere aus Wasser, bekannt, wie dies beispielsweise für den Betrieb von Dampfkesseln oder für die Verwendung in chemischen Laboren erwünscht ist. Die Flüssigkeit wird dazu durch ein lonentauscherharz geleitet, welches sauerstoffzehrende Materialien enthält. Als sauerstoffzehrende Materialien sind Metalloxide oder Metallhydroxide verwendet. Bei dem lonentauscher kann es sich um einen Kationenaustauscher, um einen Anionenaustauscher oder um ein Gemisch aus beiden handeln. Der lonentauscher dient als Träger für das sauerstoffzehrende Material. Nachteilig entsteht bei der Reaktion zwischen den sauerstoffzehrenden Materialien und dem in der Flüssigkeit gelösten Sauerstoff Eisen(III)hydroxid. Dieses Material führt zu Schlammbildung im Prozesskreislauf. Zudem wirkt dieses Material korrosiv in den Leitungen, die das Prozesswasser führen.

DE 10 2005 036 356 A1 offenbart eine Wasserbehandlungseinrichtung für eine Heizungsanlage. In einem Behälter sind lonentauscherelemente und in einer benachbarten Kammer des Behälters oder einem Zusatzbehälter ein Korrosionsschutzmittel bevorratet. Zur zumindest teilweisen Entmineralisierung des Heizungswassers wird die Wasserbehandlungseinrichtung beim Befüllen der Heizungsanlage von dem zugeführten Frischwasser durchströmt. Dabei wird auch der pH-Wert des Wassers auf einen gewünschten Wert eingestellt. Das Korrosionsschutzmittel, welches als Molybdat oder als Sauerstoffbindemittel ausgebildet sein kann, gibt chemische Bestandteile in das Wasser ab, wodurch die Korrosion von Anlageteilen zumindest verringert wird. Die Zugabe von chemischen Sauerstoffbindemitteln erhöht jedoch die Leitfähigkeit des Heizungswassers, was zu einem erhöhten Korrosionsrisiko führen kann.

Aus DE 10 2008 003 327 A1 ist eine Wasserbehandlungseinrichtung für eine Heizungsanlage mit einer Entmineralisierungs- und Enthärtungseinrichtung, welche lonentauscherelemente enthält, und einer nachgeschalteten pH-Wert-Stabilisierungseinheit bekannt. Die pH-Wert-Stabilisierungseinheit weist einen wasserdurchströmten Behälter auf, in dem ein pH-Stabilisator zur Stabilisierung des von den lonentauscherelementen geschaffenen pH-Wertes angeordnet ist. Zum Befüllen einer Heizungsanlage wird die Entmineralisierungs- und Enthärtungseinrichtung mit der nachgeschalteten pH-Wert-Stabilisierungseinheit in den Frischwasserzulauf der Heizungsanlage geschaltet und von dem Frischwasser durchströmt. Dabei wird das Wasser zumindest teilweise entmineralisiert, in seinem pH-Wert eingestellt und der pH-Wert stabilisiert.

Die DE 10 2009 022 437 A1 beschreibt eine Vorrichtung zur Behandlung von in Leitungen geführtem Wasser, um einer Korrosion der Wasserleitungen vorzubeugen. Dazu wird das Wasser durch eine als Festbett ausgebildete Mischbettelektrode geleitet, welche zusätzlich zu einem Korrosionsschutz bewirkenden Phosphatteilchen zur Vergrößerung einer Elektrodenoberfläche elektrisch leitfähige Teilchen aufweist. Durch Anlegen einer Gleichspannung kann der pH-Wert des Wassers eingestellt und die Löslichkeit der verwendeten, vorzugsweise schwer löslichen Phosphate beeinflusst werden, so dass eine gezielte Einbringung von Phosphat in das Wasser ermöglicht wird.

Aus DE 10 2013 102 426 A1 sind ein Verfahren und eine Vorrichtung zum Einstellen des pH-Wertes des Heizungswassers eine Heizungsanlage bekannt. Dabei wird das Heizungswasser im Zirkulationsbetrieb durch eine Entmineralisierungseinrichtung, die eine Mischbetteinheit aufweist, geleitet und entmineralisiert. Durch die OH-Abgabe des Anionenaustauschers wird das Heizungswasser zunächst auf einen höheren pH-Wert gebracht und kann dadurch auf einen gewünschten pH-Wert eingestellt werden. Soll der pH-Wert gesenkt werden, wird das Heizungswasser so lange durch die Entmineralisierungseinrichtung und die Mischbetteinheit geleitet, bis der Anionenaustauscher erschöpft ist. Der pH-Wert wird jetzt durch die H+ Abgabe des Kationenaustauschers abgesenkt. Die Mischbetteinheit ist in einer Bypassleitung zum Hauptstrom des Heizkreislaufes angeordnet und wird entsprechend nur von einem Teilstrom des in dem Heizkreislauf zirkulierenden Heizungswassers durchströmt.

Die DE 10 2014 103 163 A1 zeigt eine Steuerungseinrichtung, welche es ermöglicht, mit Hilfe einer Entmineralisierungseinrichtung, die einen Kationenaustauscher und einen Anionenaustauscher enthält, den pH-Wert des Heizungswassers durch Vorgabe der Materialien der in der Heizungsanlage verwendeten Komponenten auf geeignete Werte einzustellen, um deren Korrosion zumindest gering zu halten. Dabei ist die Entmineralisierungseinrichtung der Wasserbehandlungseinrichtung in einem Nebenschluss zu dem Heizungswasserkreislauf der Heizungsanlage geschaltet, so dass ein Teilstrom des Heizungswassers durch die Entmineralisierungseinrichtung zirkuliert. Durch die zyklische Behandlung kann der pH-Wert des Heizungswassers an den gewünschten Bereich herangeführt werden.

Es ist Aufgabe der Erfindung, eine Vorrichtung bzw. ein Verfahren bereitzustellen, mit dem Sauerstoff mit geringem apparativen Aufwand aus dem Nachspeisewasser und/oder dem Prozesswasser einer Heizungsanlage entfernt werden kann, ohne dass Sauerstoffbindemittel zudosiert werden muss.

Die Aufgabe der Erfindung wird gelöst mit einer Vorrichtung zur Reduzierung des Sauerstoffgehaltes im Nachspeisewasser für eine Heizanlage oder des Prozesswassers einer Heizungsanlage, mit einer von Wasser durchströmbaren Mischbettpatrone, wobei die Mischbettpatrone ein Mischbettharz zur Wasserenthärtung aufweist, wobei das Mischbettharz einen Kationenaustauscher in der Natriumform und einen Anionenaustauscher aufweist, wobei der Anionenaustauscher ein Anionentauscherharz aufweist, das überwiegend oder vollständig mit einem Sauerstoffbindemittel, nämlich Sulfit beladen ist.

Bei der Durchleitung des zu behandelnden Wassers (Nachspeisewasser oder Prozesswasser) durch das Mischbett werden die sauerstoffzehrenden, auf dem Anionentauscherharz komplex gebundenen Sulfitionen (SO₃²⁻) mit dem im Wasser gelösten Sauerstoff durch Oxidation in einer Oxidationsreaktion zu Sulfationen (SO₄²⁻). Da beide Ionen zweiwertig sind haben sie eine hohe Affinität zum Anionentauscherharz und werden nicht von den im Wasser befindlichen einwertigen Ionen wie Chlorid und Nitrat verdrängt. Ebenso wenig vom zweiwertigen Sulfat. Höher geladene Anionen wie z. B. Phosphat kommen nur in nicht nennenswerter Konzentration vor und sind somit nicht relevant für die bestimmungsgemäße Funktion der Mischbettpatrone. Das gebildete Sulfation hat günstiger Weise eine höhere Affinität zum Anionenaustauscher als die reduzierte Form des Sulfit. Dadurch wird vermieden, dass das Prozesswasser in der Heizungsanlage mit den sauerstoffzehrenden Chemikalien belastet wird.

Gleichzeitig wird das Wasser in der Mischbettpatrone enthärtet. Dabei werden durch Ionentausch am Kationenaustauscher vornehmlich die zweiwertigen Härtebildner, beispielsweise Calcium und Magnesium, welche im Nachspeisewasser oder im Prozesswasser geführt werden, gegen Natriumionen des Kationenaustauschers ausgetauscht, da diese eine höhere Affinität zum Kationentauscherharz besitzen und das einwertige Natriumion verdrängen. Zu diesem Zweck liegt der Kationentauscher im Mischbett vorzugsweise vollständig in der Natriumform vor.

Mit anderen Worten kann mit der erfindungsgemäßen Mischbettpatrone gleichzeitig eine Enthärtung des Wassers und eine Sauerstoffzehrung vorgenommen werden. Damit ist das Wasser optimal zur Verwendung als Prozesswasser in einer Heizungsanlage vorbereitet. Insbesondere können bei diesem Vorgehen auch die Härtevorgaben, zum Beispiel nach VDI 2035, eingehalten werden. Die Korrosion von Bauteilen des Prozesskreislaufs, insbesondere aus Schwarzstahl, auch in nicht korrosionstechnisch geschlossenen Systemen, wird erheblich herabgesetzt.

Das erfindungsgemäße Mischbettharz lässt sich einfach herstellen. Zu diesem Zweck wird zunächst ein handelsübliches Mischbettharz verwendet, wobei das Kationentauscherharz in der H⁺-Form und das Anionentauscherharz in der OH⁻-Form vorliegt. Vorzugsweise ist das Mischungsverhältnis von Anionen- zu Kationentauscherharz so gewählt ist, dass es zum Anionentauscherharz verschoben ist. Zur Konvertierung dieses handelsüblichen Mischbettharzes in das erfindungsgemäße Mischbettharz wird eine Natriumsulfitlösung verwendet. Dabei verdrängen dann die Na⁺-Ionen (zum überwiegenden Teil oder vollständig) die H⁺-Ionen auf dem Kationentauscherharz. Die OH⁻-Ionen des Anionentauscherharzes werden (zum überwiegenden Teil oder vollständig) durch Sulfitionen (SO₃²⁻) verdrängt.

Im Rahmen der Erfindung kann die Mischbettpatrone sowohl zur Verwendung in der Nachspeiseleitung als auch in einem Leitungsabschnitt des Prozesswasser-Kreislaufs eingesetzt werden. Überraschenderweise kann bei beiden Anwendungsfällen ein gutes Behandlungsergebnis erreicht werden.

Das erfindungsgemäße Verfahren bzw. die erfindungsgemäße Vorrichtung kann, vornehmlich in Umlaufsystemen mit unkontrolliertem Sauerstoffzutritt, Verwendung finden, z. B. in Heizungsanlagen mit diffusionsoffenen Fußboden-Heizungsrohren, obenliegenden offenen Ausgleichsbehältern oder einer unzureichenden Druckhaltung.

Gemäß einer bevorzugten Ausgestaltungsvariante der Erfindung kann es vorgesehen sein, dass der Kationenaustauscher von einem stark sauren Kationentauscherharz und der Anionenaustauscher von einem stark basischen Anionentauscherharz gebildet sind. Ein solcher Mischbettionentauscher lässt sich besonders einfach in die erfindungsgemäße Form konvertieren und weist eine hohe Behandlungseffektivität auf. Während die Konvertierung eines reinen Anionenaustauschers relativ langsam und auch unvollständig abläuft und zudem aufwändiger gespült werden muss, lassen sich diese Nachteile überraschender Weise durch den Einsatz eines Mischbetts einfach überwinden. Im Mischbett (Entsalzungsharz) liegen zunächst ein stark saurer Kationenaustauscher und ein stark basischer Anionenaustauscher gemischt vor. Bei der Konvertierung dieser Mischung mit Natriumsulfit-Lösung wird die OH-Gruppe am Anionenaustauscher durch SO3-- verdrängt und gleichzeitig das H+ vom Kationenaustauscher durch Na+. Dabei entsteht Wasser!

Vorteilhafterweise kann so das vom Anionenaustauscher freigesetzte OH- einfach mit dem gleichzeitig freigesetzten Proton (H+) des Kationenaustauscher rekombinieren und so aus dem Gleichgewicht entfernt werden. Die Konvertierungsreaktion verschiebt also stark auf die rechte Seite zum gewünschten Produkt, die Reaktion läuft somit zügig und vollständig ab. Dies kommt der industriellen Produktion derartiger Sauerstoffzehrpatronen sehr entgegen.

Erfindungsgemäß ist es vorzugsweise vorgesehen, dass das Verhältnis des Volumens an Anionenaustauscher zu dem Volumen an Kationenaustauscher in Vol% X : Y beträgt, wobei X das Volumen des Anionenaustauschers und Y das Volumen des Kationenaustauschers ist, und wobei X ≥ 60, vorzugsweise ≥63, und Y=100-X ist.

Da die Equivalentkapazität des Anionenaustauschers grundsätzlich niedriger ist als die des Kationenaustauschers wird hier ein Volumenanteil von mindestens 60% angestrebt, so dass die Kapazitäten dann möglichst ausgeglichen sind. Um eine möglichst gute Sauerstoffzehrung am konvertierten Anionenharz zu erreichen, wird aber ein noch höherer Anteil in der Mischung des Mischbettharzes bevorzugt, zudem auch der lonenaustausch bei der Enthärtung gegenüber der Reaktion der Sauerstoffzehrung schneller abläuft. Gemäß einer denkbaren Erfindungsvariante kann es vorgesehen sein, dass beispielsweise die Mischungsverhältnisse (Anionetauscher:Kationentauscher) 63:37 oder 67:33 betragen.

Im Bereich der Kreislaufwasseraufbereitung ist- aus Korrosionsschutzgründen - grundsätzlich ein alkalischer pH-Wert gefordert, welcher sich gemäß einer Erfindungsvariante dann im Wasser einstellt wenn nicht alle OH-Gruppen durch Sulfitionen ersetzt sind.

Eine erfindungsgemäße Vorrichtung kann dergestalt sein, dass die Mischbettpatrone einen Reaktionsraum aufweist, in dem das Mischbettharz in Schüttgutform gehalten ist, dass der Reaktionsraum über einen Zulauf und einen Ablauf an eine Zulaufleitung und eine Ablaufleitung anschließbar ist, wobei der Zulauf und/oder der Ablauf mittels einer Barriere überdeckt ist/sind, die aus zueinander beabstandet angeordneten Stegen, vorzugsweise zueinander parallelen Stegen, gebildet sind, wobei zwischen den Stegen durchgängige Schlitze gebildet sind, die eine Längserstreckung aufweisen , welche ein Vielfaches der mittleren Teilchengröße der Harzpartikel des Mischbettharzes aufweisen. Eine solche Bauweise hat sich bewährt, da die Granulate des Mischbettharzes sich zwar auf den Stegen absetzen und dabei die Schlitze teilweise überdecken können. Da die Granulate in Kugelform oder annähernd in Kugelform vorliegen, werden jedoch selbst wenn die Schlitze in Längsrichtung vollständig mit Granulat-Teilchen bedeckt sind, dennoch verbleibende Durchtritts-Öffnungen geschaffen, durch die das Wasser strömen kann. Dabei ist es insbesondere so, dass dann die Teilchen wieder von den Schlitzen abgespült werden, sodass eine Verblockung der Schlitze sicher verhindert ist.

Die Verblockung kann besonders wirksam verhindert werden, wenn die Breite der Schlitze quer zur Längserstreckung im Bereich zwischen 0,1 und 0,3 Millimeter gewählt ist.

Eine denkbare Erfindungsvariante ist derart, dass der Zulauf und der Ablauf zum Reaktionsraum der Mischbettpatrone mit abnehmbaren und Sauerstoffdiffusionsfesten Verschlüssen, vorzugsweise bestehend aus Metall oder aus einem Kunststoffmaterial, welches mit einer Sauerstoff-Diffussionssperre versehen ist, verschlossen sind. Auf diese Weise kann die Mischbettpatrone nach der Konversion in die erfindungsgemäße Gestalt des Mischbettharzes luftdicht verschlossen werden. Hierdurch wird ein Eintrag von Sauerstoff in den Reaktionsraum während der Lagerung der Mischbett Patrone verhindert. Ein solcher Sauerstoffeintrag würde dazu führen, dass Sulfitionen unerwünscht mit dem Luft-Sauerstoff reagieren. Die Verwendung von Metall als Werkstoff garantiert, dass selbst bei höheren Temperaturen ein Sauerstoffeintrag in den Reaktionsraum zuverlässig verhindert ist.

Ergänzend oder alternativ kann es zu diesem Zweck auch vorgesehen sein, dass der Reaktionsraum der Mischbettpatrone von einem sauerstoffdiffusionsfesten Mantel umgeben, vorzugsweise von diesem gebildet, ist, wobei der Mantel vorzugsweise aus Metall besteht oder aus einem Kunststoffmaterial gebildet ist, welches mit einer Sauerstoff-Diffusionssperre versehen ist.

Eine besonders bevorzugte Erfindungsvariante ist dergestalt, dass der Reaktionsraum mit einem Bettvolumen mit Mischbettharz gefüllt ist, und dass bei einem gegebenen Druck am Zulauf der Mischbettpatrone und einem gegebenen Druck am Ablauf der Mischbettpatrone das Volumen im Reaktionsraum der Mischbettpatrone so gewählt ist, dass der Volumenstrom im Reaktionsraum maximal 0,5 Bettvolumen pro Minute beträgt. Dann wird für die verschiedenen Einsatzmöglichkeiten der erfindungsgemäßen Vorrichtung eine ausreichende Behandlungsdauer verwirklichbar, die eine befriedigende Sauerstoffzehrung und gleichzeitig eine zumindest teilweise Enthärtung des behandelten Wassers garantiert.

Bei Verwendung der Mischbettpatrone als Nachspeisepatrone am Nachspeise-Wasseranschluss der Heizungsanlage kann es im Rahmen der Erfindung vorgesehen sein, dass der Volumenstrom im Bereich zwischen 0,1 und 0,5 Bettvolumen pro Minute beträgt. Das Nachspeisewasser hat üblicherweise eine niedrige Temperatur, was zu einer langsamen Reaktivität führt. Entsprechend können die lonen-Tauschvorgänge im Mischbettharz nur langsam ablaufen. Die Erfinder haben erkannt, dass für diesen Anwendungszweck eine ausreichend lange Verweilzeit des zu behandelnden Wassers im Reaktionsraum erforderlich ist, um die gewünschten Behandlungsergebnisse zu erreichen.

Bei Verwendung der Mischbettpatrone als Prozesswasser-Behandlungspatrone im Prozesswasserkreislauf der Heizungsanlage, kann es im Rahmen der Erfindung vorgesehen sein, dass der Volumenstrom, mit welchem die Mischbettpatrone durchströmt wird, im Bereich zwischen 0,5 und 1 Bettvolumen pro Minute beträgt. Das Prozesswasser (Heizungswasser) weist hier eine erhöhte Temperatur auf, die zu einer verbesserten Reaktivität führt. Entsprechend können die Ionen-Tauschvorgänge relativ schnell ablaufen. Somit kann die Verweildauer des Wassers in der Reaktionskammer kurz gewählt werden.

Eine bevorzugte Erfindungsvariante kann dergestalt sein, dass der Anionenaustauscher teilweise im der OH⁻-Form vorliegt, wobei insbesondere vorgesehen sein kann, dass der Anionenaustauscher im Bereich zwischen 85% bis 99% in der Sulfitform und im Bereich zwischen 1% und 15% in der OH⁻-Form vorliegt, besonders bevorzugt, dass der Anionenaustauscher im Bereich zwischen 95% bis 99% in der Sulfitform und im Bereich zwischen 1% und 5% in der OH⁻-Form vorliegt. Dadurch, dass der Anionentauscher teilweise in der OH⁻-Form vorliegt, besteht die Möglichkeit den pH-Wert im alkalischen Bereich anzuheben. Mit anderen Worten kann mit einer einzigen, einfach herstellbaren Mischbettpatrone das Wasser enthärtet, alkalisiert und gleichzeitig im Sauerstoffgehalt deutlich gezehrt werden.

Die Aufgabe der Erfindung wird auch gelöst mit einer Heizungsanlage mit einem Heizkreislauf, in dem Prozesswasser im Umlauf von einem Wärmetauscher, insbesondere einem Wärmetauscher eines Wärmeerzeugers, zu einem oder mehreren Heizkörpern geführt wird. Erfindungsgemäß ist bei einer solchen Heizungsanlage eine Vorrichtung nach einem der Ansprüche 1 bis 11 vorgesehen, wobei die Vorrichtung am Nachspeise-Wasseranschluss der Heizungsanlage und/oder im Prozesswasserkreislauf der Heizungsanlage angeordnet ist.

Die Aufgabe der Erfindung wird auch gelöst mit einem Verfahren zur Reduzierung des Sauerstoffgehalts des Prozesswassers in einer Heizungsanlage, wobei das Prozesswasser im Umlauf von einem Wärmetauscher, insbesondere einem Wärmetauscher eines Wärmeerzeugers, zu einem oder mehreren Heizkörpern geführt wird, wobei eine Vorrichtung nach einem der Ansprüche 1 bis 11 vorgesehen ist, wobei der Vorrichtung an einem Nachspeise-Wasseranschluss der Heizungsanlage Frischwasser zugeführt, dieses durch die Mischbettpatrone geleitet und durch das Mischbett zur Behandlung des Wassers hindurchgeleitet und anschließend dem Prozesswasser beigemischt wird, und/oder dass die Vorrichtung nach einem der Ansprüche 1 bis 11 im Prozesswasserkreislauf der Heizungsanlage angeordnet ist und ihr Prozesswasser zugeführt, dieses durch die Mischbettpatrone geleitet und durch das Mischbett zur Behandlung des Wassers hindurchgeleitet und anschließend dem Prozesswasser wieder beigemischt wird.

Nachfolgend wird ein mögliches Verfahren zur Erzeugung einer erfindungsgemäßen Vorrichtung beschrieben.

Zunächst wird in eine Mischbettpatrone oder eine geeignete Behandlungskammer ein Mischbettharz eingefüllt. Dieses Mischbettharz besteht aus einem Anionentauscherharz und einem Kationentauscherharz. Wie dies vorstehend beschrieben wurde kann das Verhältnis zwischen dem Anionentauscherharz und dem Kationentauscherharz in Richtung zum Anionentauscherharz verschoben sein. Vorzugsweise ist das Verhältnis der Volumina von Anionentauscherharz und Kationentauscherharz so gewählt, wie dies oben beschrieben wurde.

Der Kationentauscher liegt in der H⁺-Form und der Anionentauscher in der OH⁻-Form vor. Bei dem Mischbettharz kann es sich beispielsweise folgendes Mischbettharz handeln, welches handelsüblich erhältlich ist:
Lanxess NM 60 (Mischbett mit Verhältnis Anionentauscher zu Kationentauscher: 60:40)
Lanxess Lewatit 3367 (Mischbett mit Verhältnis Anionentauscher zu Kationentauscher: 67:33)
Purolite MB 400 (Mischbett mit Verhältnis Anionentauscher zu Kationentauscher: 60:40)
Purolite MB 410 (Mischbett mit Verhältnis Anionentauscher zu Kationentauscher: 63:37)

Die Menge an eingefülltem Mischbettharz beträgt ein Bettvolumen.

Anschließend wird dieses Mischbettharz mit einer 10 - 15 % Natriumsulfitlösung gespült. Die Spülgeschwindigkeit beträgt 4 Bettvolumen pro Stunde. Das durch das Mischbett geleitete Spülvolumen an Natriumsulfitlösung beträgt ein Bettvolumen (Beispiel: 5 I Bettvolumen Mischbettharz wird mit 5 I Natriumsulfitlösung gespült für die Dauer von 15 Minuten behandelt).

Dann wird die Mischbettpatrone mit vollentsalztem Wasser gespült, bis am Patronenausgang die Leitfähigkeit der Spüllösung 200 µS/cm beträgt.

Abschließend wird das Spülwasser aus der Mischbettpatrone mit Stickstoff verdrängt. Die Spülrichtung ist dabei vorzugsweise in Schwerkraftrichtung orientiert. Entsprechend kann sich von oben kommend ein Druckpolster des Spülgases aufbauen. Das Spülgas verdrängt dann das Spülwasser in Richtung zum Patronenausgang Als Spülgas kann anstatt Stickstoff auch Argon oder ein anderes Inertgas verwendet werden, welches keinen Sauerstoff enthält.

Abschließend werden Einlass und Auslass der Mischbettpatrone mit luftdichten und abnehmbaren Stopfen verschlossen, vorzugsweise mit Metallstopfen, die über O-Ring-Dichtungen gegenüber der Mischbettpatrone abgedichtet sind.

Das Material der Mischbettpatrone kann Kunststoff sein, wenn Wasser mit niedriger Temperatur (beispielsweise Nachspeisewasser) behandelt wird. Dann besteht nur eine geringe Gefahr, dass über die Wandung der Mischbettpatrone Sauerstoff eindringt.

Das Material der Patrone kann Metall oder oberflächenbehandeltes Kunststoff sein, wenn Wasser mit höherer Temperatur (beispielsweise Prozesswasser der Heizungsanlage mit erhöhter Temperatur (beispielsweise mit 40 °C) behandelt wird. Damit wird vermieden, dass Sauerstoff von der Umgebung in die Mischbettpatrone eindringt.

Beispielsweise wurde nach der Erfindung eine Mischbettpatrone mit einem Mischbettharz gefüllt, welches einen Anionentauscherharz-Anteil von 63 Vol% aufwies. Entsprechend betrug das Volumen des Kationentauscherharz-Anteils 37 Vol%. Das Bettvolumen, welches das Mischbettharz einnahm, betrug 20 L. Das Mischbettharz wurde mit einer 15-prozentigen Natriumsulfit-Lösung soweit beladen, bis die Leitfähigkeit am Ausgang der zu konvertierenden Patrone (Mischbett) min. 90% der Konvertierungslösung (Na₂SO₃) betrug. Anschließend wurde das Mischbettharz mit vollentsalztem Wasser gespült und mit einem Gas dann das Spülwasser ausgetrieben, wobei das Gas keinen Sauerstoff enthielt.

Die so geschaffene Mischbettpatrone wurde zur Behandlung von Rohwasser eingesetzt, welches als Nachspeisewasser für eine Heizungsanlage dient.

Das Rohwasser wies am Eintritt der Mischbettpatrone eine Härte von 9° dH, eine Sauerstoffkonzentration von 11 mg/l bei einer Wassertemperatur von 10 °C auf. Am Ausgang der Mischbettpatrone war dann eine Härte von 0,5° dH und eine Sauerstoffkonzentration von kleiner 1 mg/l über ein Volumen von mehr als 1500 I messbar. Die Behandlungsgeschwindigkeit wurde so eingestellt, dass ein Volumenstrom von 8 l/min Rohwasser (0,4 BV/min) durch die Mischbettpatrone geleitet wurde.

## Patentansprüche

1. Vorrichtung zur Reduzierung des Sauerstoffgehaltes im Nachspeisewasser für eine Heizanlage oder des Prozesswassers einer Heizungsanlage, mit einer von Wasser durchströmbaren Mischbettpatrone, wobei die Mischbettpatrone eine Harzmischung aufweist, wobei die Harzmischung einen Kationenaustauscher in der Natriumform zur Enthärtung des Nachspeisewassers oder des Prozesswassers aufweist und einen Anionenaustauscher aufweist, der überwiegend oder vollständig mit einem Sauerstoffbindemittel, nämlich Sulfit beladen ist.

2. Vorrichtung nach Anspruch 1, **dadurch gekennzeichnet, dass** das Sulfat eine höhere Affinität zum Material des Anionentauscherharz aufweist, als die reduzierte Form des Sulfits.

3. Vorrichtung nach einem der Ansprüche 1 oder 2, **dadurch gekennzeichnet, dass** der Kationenaustauscher von einem stark sauren Kationentauscherharz und der Anionenaustauscher von einem stark basischen Anionentauscherharz gebildet sind.

4. Vorrichtung nach einem der Ansprüche 1 bis 3, **dadurch gekennzeichnet, dass** das Verhältnis des Volumens an Anionenaustauscher zu dem Volumen an Kationenaustauscher in Vol.% X:Y beträgt, wobei X das Volumen des Anionenaustauschers und Y das Volumen des Kationenaustauschers ist, und wobei X ≥ 60, vorzugsweise ≥63, und Y=100-X ist.

5. Vorrichtung nach Anspruch 4, **dadurch gekennzeichnet, dass** das Volumen X des Anionenaustauschers im Bereich zwischen ≥60 und ≤70, vorzugsweise im Bereich zwischen ≥60 und ≤67, besonders bevorzugt im Bereich zwischen ≥63 und ≤67, gewählt ist.

6. Vorrichtung nach einem der Ansprüche 1 bis 5, **dadurch gekennzeichnet, dass** die Mischbettpatrone einen Reaktionsraum aufweist, in dem das Mischbettharz in Schüttgutform gehalten ist, dass der Reaktionsraum über einen Zulauf und einen Ablauf an eine Zulaufleitung und eine Ablaufleitung anschließbar ist, wobei der Zulauf und/oder der Ablauf mittels einer Barriere überdeckt ist/sind, die aus zueinander beabstandet angeordneten Stegen, vorzugsweise zueinander parallelen Stegen, gebildet sind, wobei zwischen den Stegen durchgängige Schlitze gebildet sind, die eine Längserstreckung aufweisen, welche ein Vielfaches der mittleren Teilchengröße der Harzpartikel des Mischbettharzes aufweisen.

7. Vorrichtung nach einem der Ansprüche 1 bis 6, **dadurch gekennzeichnet, dass** der Zulauf und der Ablauf zum Reaktionsraum der Mischbettpatrone mit abnehmbaren und sauerstoffdiffusionsfesten Verschlüssen, vorzugsweise bestehend aus Metall oder aus einem Kunststoffmaterial, welches mit einer Sauerstoff-Diffussionssperre versehen ist, verschlossen sind.

8. Vorrichtung nach einem der Ansprüche 1 bis 7, **dadurch gekennzeichnet, dass** der Reaktionsraum der Mischbettpatrone von einem Sauerstoffdiffusionsfesten Mantel umgeben, vorzugsweise von diesem gebildet ist, wobei der Mantel vorzugsweise aus Metall besteht oder aus einem Kunststoffmaterial gebildet ist, welches mit einer Sauerstoff-Diffusionssperre versehen ist.

9. Vorrichtung nach einem der Ansprüche 1 bis 8, **dadurch gekennzeichnet, dass** der Reaktionsraum mit einem Bettvolumen mit Mischbettharz gefüllt ist, dass bei einem gegebenen Druck am Zulauf der Mischbettpatrone und einem gegebenen Druck am Ablauf der Mischbettpatrone das Volumen im Reaktionsraum der Mischbettpatrone so gewählt ist, dass der Volumenstrom im Reaktionsraum maximal 0,5 Bettvolumen pro Minute beträgt.

10. Vorrichtung nach Anspruch 9, **dadurch gekennzeichnet, dass** bei Verwendung der Mischbettpatrone als Nachspeisepatrone am Nachspeise-Wasseranschluss der Heizungsanlage der Volumenstrom 0,1 bis maximal 0,5 Bettvolumen pro Minute beträgt oder dass bei Verwendung der Mischbettpatrone als Prozesswasser-Behandlungspatrone im Prozesswasserkreislauf der Heizungsanlage, der Volumenstrom 0,5 bis maximal 1 Bettvolumen pro Minute beträgt.

11. Vorrichtung nach einem der Ansprüche 1 bis 10, **dadurch gekennzeichnet, dass** der Anionenaustauscher teilweise im der OH⁻-Form vorliegt, wobei insbesondere vorgesehen sein kann, dass der Anionenaustauscher im Bereich zwischen 85% bis 99% in der Sulfitform und im Bereich zwischen 1% und 15% in der OH⁻-Form vorliegt, besonders bevorzugt, dass der Anionenaustauscher im Bereich zwischen 95% bis 99% in der Sulfitform und im Bereich zwischen 1% und 5% in der OH⁻-Form vorliegt.

12. Heizungsanlage mit einem Heizkreislauf, in dem Prozesswasser im Umlauf von einem Wärmetauscher, insbesondere einem Wärmetauscher eines Wärmeerzeugers, zu einem oder mehreren Heizkörpern geführt wird,
**dadurch gekennzeichnet**
**dass** eine Vorrichtung nach einem der Ansprüche 1 bis 11 vorgesehen ist, wobei die Vorrichtung am Nachspeise-Wasseranschluss der Heizungsanlage und/oder im Prozesswasserkreislauf der Heizungsanlage angeordnet ist.

13. Verfahren zur Reduzierung des Sauerstoffgehalts des Nachspeisewassers und/oder des Prozesswassers in einer Heizungsanlage, wobei das Prozesswasser im Umlauf von einem Wärmetauscher, insbesondere einem Wärmetauscher eines Wärmeerzeugers, zu einem oder mehreren Heizkörpern geführt wird,
**dadurch gekennzeichnet**
**dass** eine Vorrichtung nach einem der Ansprüche 1 bis 11 vorgesehen ist, wobei der Vorrichtung an einem Nachspeise-Wasseranschluss der Heizungsanlage Frischwasser zugeführt, dieses durch die Mischbettpatrone geleitet und durch das Mischbett zur Behandlung des Wassers hindurchgeleitet und anschließend dem Prozesswasser beigemischt wird, und/oder dass die Vorrichtung nach einem der Ansprüche 1 bis 11 im Prozesswasserkreislauf der Heizungsanlage angeordnet ist und ihr Prozesswasser zugeführt, dieses durch die Mischbettpatrone geleitet und durch das Mischbett zur Behandlung des Wassers hindurchgeleitet und anschließend dem Prozesswasser wieder beigemischt wird,
